# EUROPÄISCHE PATENTSCHRIFT

(11) **EP 2 083 604 B1**
(45) Veröffentlichungstag und Bekanntmachung des Hinweises auf die Patenterteilung: **18.04.2012**
(21) Anmeldenummer: 09006127.6
(22) Anmeldetag: 14.08.2006
(51) Int. Cl.: H04W 76/02

(54) **Verfahren zum Betrieb eines Mobilfunknetzes und Mobilfunknetz**
Method for operating a mobile radio network and mobile radio network
Procédé destiné au fonctionnement d'un réseau mobile et réseau mobile

(30) Priorität: 19.08.2005 DE 102005039363; 24.10.2005 DE 102005050852
(43) Veröffentlichungstag der Anmeldung: 29.07.2009
(62) Teilanmeldung aus: 06792812.7
(73) Patentinhaber: SIEMENS AKTIENGESELLSCHAFT, 80333 München (DE)
(72) Erfinder: Zaus, Robert, Dr., 80686 München (DE)

(56) Entgegenhaltungen:
- WO-A2-01/41376
- "3GPP 23.172 Version 6.3.0; Universal Mobile Telecommunications System (UMTS)" ETSI STANDARDS, EUROPEAN TELECOMMUNICATIONS STANDARDS INSTITUTE, SOPHIA-ANTIPO, FR, Bd. 3-CN3, Nr. V630, Juni 2005 (2005-06), XP014030501 ISSN: 0000-0001

## Beschreibung

Die Erfindung betrifft ein Verfahren nach dem Oberbegriff des Anspruchs 1 sowie ein zur Durchführung dieses Verfahrens ausgestaltetes Mobilfunknetz.

Für die technische Weiterentwicklung und breitere und universellere Nutzung der Mobilfunknetze spielt die Verknüpfung zwischen Sprach- und Multimedia-Kommunikation eine herausragende Rolle. Während in den Anfangsjahren der mobilen Kommunikation Sprachverbindungen unabhängig von und unkorreliert mit der bereits damals bestehenden Möglichkeit des Austausches von Kurznachrichten (SMS) genutzt wurden, sind die Nutzer heute zunehmend an der Möglichkeit einer schnellen Umschaltung zwischen Sprach- und Text-Kommunikation interessiert. Noch größeres Interesse besteht an sogenannten Multimedia-Calls, bei denen dem Gesprächspartner zeitgleich Bilder oder Videosequenzen präsentiert werden können.

Im 3GPP Mobilfunkstandard ist seit Release 5 in der Spezifikation TS 23.172 ein spezieller Dienst "Multimedia Service (UDI/RDI) with Fallback to Speech and Service Modification" beschrieben. Dieser Dienst erlaubt es dem Mobilfunkteilnehmer, dem Netz beim Call-Aufbau zu signalisieren, dass er während des Gesprächs die Möglichkeit haben möchte, zwischen den beiden Diensten "Sprache" und "Multimedia" (Videotelefonie) zu wechseln.

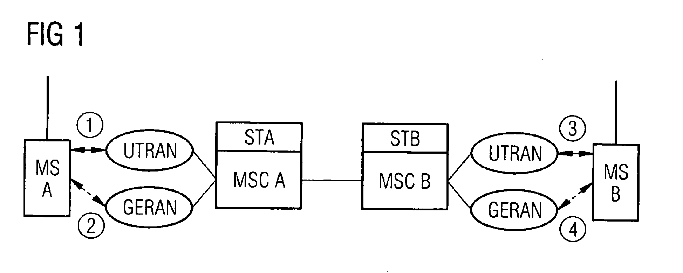

Mögliche Anwendungsfälle dieses Dienstes sind z.B.:
a) Der Teilnehmer möchte zunächst eine Sprechverbindung aufbauen, aber die Option haben, später während des Gesprächs auf Multimedia zu wechseln, um dem anderen Teilnehmer etwas zu zeigen. Das Umschalten auf Multimedia kann dabei auch von dem anderen Teilnehmer initiiert werden. Wenn es einer der beiden Teilnehmer wünscht, kann er anschließend wieder von Multimedia auf Sprache umschalten.
b) Der Teilnehmer möchte einen Multimedia Call aufbauen. Falls das Netz oder das Mobiltelefon des angerufenen Teilnehmers keinen Multimedia Call unterstützen oder der angerufene Teilnehmer anstelle eines Multimedia Calls nur eine Sprechverbindung haben möchte, wird durch die im Standard TS 23.172 beschriebene Signalisierung anstelle des Multimedia Calls eine Sprechverbindung aufgebaut.
c) Der Teilnehmer möchte einen Multimedia Call aufbauen. Falls das Netz während des Gesprächs den Multimedia Call nicht aufrechterhalten kann, dann soll das Netzwerk die Verbindung nicht abreißen lassen, sondern rechtzeitig auf eine Sprechverbindung umschalten (siehe TS 23.172, Kapitel 4.2.5). Diese Situation kann z.B. auftreten,
   - wenn die Funkverbindung für einen Multimedia Call, der einen 64 kbit/s UDI Radio Bearer erfordert, zu schlecht wird, die Übertragungsqualität für einen 12.2 kbit/s Radio Bearer für Sprache aber noch ausreicht (UDI = unrestricted digital information),
   - oder wenn ein Handover in eine andere Funkzelle stattfindet, in der wegen einer hohen Verkehrslast nicht genügend Bandbreite für einen 64 kbit/s UDI Radio Bearer zur Verfügung steht,
   - oder wenn ein Handover von einem Radio Access Network (UTRAN) zu einem anderen (GERAN) stattfindet und das neue Radio Access Network den Multimedia Call generell nicht unterstützt (siehe Fig. 1).

Gemäß TS 23.172, Kapitel 4.2.5, soll im Fall c) diejenige Mobilfunkvermittlungsstelle MSC, die den Wechsel von Multimedia auf Sprache veranlasst hat, den Teilnehmern wieder einen Wechsel nach Multimedia anbieten, wenn sie später während des Gesprächs feststellt, dass wieder ein Multimedia Call möglich wäre. Die Signalisierung dazu ist in der TS 23.172 beschrieben.

Im Standard wird also der netzwerk-initiierte Dienstwechsel zur Zeit nur für den Fall c) betrachtet. Es wäre aber wünschenswert, dass das Netz den Teilnehmern auch im Fall b) einen Wechsel nach Multimedia anbietet, wenn der Multimedia Call nur deshalb nicht zustande gekommen ist, weil auf einer der beiden Seiten zum Zeitpunkt des Gesprächsaufbaus aus netzwerk-internen Gründen kein Multimedia Call möglich war (z.B. weil einer der beiden Teilnehmer sich zum Zeitpunkt des Call-Aufbaus in einer GSM-Zelle aufgehalten hat).

Außerdem beschreibt der Standard nicht, was passieren soll, wenn der Multimedia Call nach einiger Zeit zwar auf der einen Seite wieder möglich wird, z.B. nach einem Wechsel des Teilnehmers von einer GSM- in eine UMTS-Zelle, dafür aber am anderen Ende der Verbindung inzwischen kein Multimedia Call mehr möglich ist, z.B. nach einem Wechsel des anderen Teilnehmers von einer UMTS- in eine GSM-Zelle. (Siehe Fig. 1: Teilnehmer A mit Mobilfunkendgerät MSA wechselt zurück von GERAN (2) zu UTRAN (1), aber Teilnehmer B mit Mobilfunkendgerät MSB hat inzwischen von UTRAN (3) zu GERAN (4) gewechselt; vgl. im übrigen die Figurenbeschreibung weiter unten.)

Allgemeiner geht es um folgendes Problem: Einer der beiden Teilnehmer möchte einen Dienst 1 nutzen, der aber nur in Teilen des Netzes zur Verfügung steht oder wegen einer Knappheit gewisser Ressourcen nicht jederzeit angeboten werden kann. Wenn der höherwertige Dienst 1 vom Netzwerk nicht zur Verfügung gestellt werden kann und das Netzwerk stattdessen eine Verbindung für einen Dienst 2 aufbaut bzw., falls die Verbindung für Dienst 2 bereits aufgebaut ist, den Dienstwechsel von Dienst 2 nach Dienst 1 ablehnt, soll der Teilnehmerwunsch nach Dienst 1 im Netz gespeichert werden.

Sobald Dienst 1 im Netz wieder zur Verfügung steht (z.B. weil einer der Teilnehmer in eine andere Funkzelle gewechselt hat), soll den Teilnehmern der Wechsel zu Dienst 1 angeboten werden.

Der Teilnehmerwunsch soll nach Möglichkeit im Netz gelöscht werden, wenn die Verbindung zwischen den Teilnehmern abgebaut wird oder wenn einer der beiden Teilnehmer den vom Netzwerk vorgeschlagenen Dienstwechsel nach Dienst 1 nicht akzeptiert (entweder indem er den Wechsel explizit ablehnt oder indem er auf das Angebot nicht antwortet und daraufhin im Netzwerk ein Überwachungstimer abläuft).

Wie weiter oben ausgeführt, behandelt der Standard zur Zeit nur den Fall c) und hat auch dafür nur eine unvollständige Lösung.

Zitat aus TS 23.172, v 6.2.0, Kapitel 4.2.5.2:

"The network initiated service change from speech to multimedia in Iu mode is an optional feature. If supported the MSC initiating the service upgrade to multimedia shall use the following procedure. However a service change from speech to multimedia should not be initiated unless a network initiated service change from multimedia to speech had previously taken place during the same user session...."

Die Information, ob vorher ein netzwerk-initiierter Dienstwechsel von Multimedia nach Sprache stattgefunden hat, ist aber nur lokal in der MSC vorhanden, die den Wechsel durchgeführt hat. Die Signalisierung zwischen den MSCen erlaubt es nämlich nicht, der anderen MSC mitzuteilen, warum ein Dienstwechsel angefordert wird (teilnehmer- oder netzwerk-initiiert).

Infolgedessen versagt der vom Standard beschriebene Mechanismus, wenn der Wechsel zu Multimedia zu einem bestimmten Zeitpunkt in MSC A möglich wird, inzwischen aber am anderen Ende der Verbindung, in MSC B, nicht mehr möglich ist. Da es die Signalisierung zwischen MSC A und MSC B nicht erlaubt, der MSC A mitzuteilen, ob der Dienstwechsel von Sprache zu Multimedia von MSC B aus netzwerk-internen Gründen abgelehnt wurde oder weil der Teilnehmer B nicht wechseln wollte, wird MSC A in dieser Situation den Teilnehmerwunsch nach einem Dienstwechsel wieder löschen.

In der internationalen Patentanmeldung WO 01/41376 A2 wird eine dynamische Aktualisierung der Dienstqualität in einem Paketvermittlungsnetz beschrieben. Hierbei werden Dienstgüteressourcen in Abhängigkeit von einer erfassten Verstopfung im Paketvermittlungsnetz einer Datenkommunikationssitzung zugewiesen, wobei ein erster, zweiter und dritter Dienstgütegrad zur Verfügung steht.

Der Erfindung liegt daher die Aufgabe zugrunde, ein verbessertes Verfahren der gattungsgemäßen Art bereitzustellen, welches eine universellere und flexiblere Nutzung von Diensten mit unterschiedlichem Ressourcenbedarf in einem Mobilfunknetz ermöglicht. Weiter liegt der Erfindung die Aufgabe der Bereitstellung eines entsprechend verbesserten Mobilfunknetzes zugrunde.

Diese Aufgabe wird in ihrem Verfahrensaspekt durch ein Verfahren mit den Merkmalen des Anspruchs 1 und in ihrem Vorrichtungsaspekt durch ein Mobilfunknetz mit den Merkmalen des Anspruchs 8 gelöst. Zweckmäßige Fortbildungen des Erfindungsgedankens sind Gegenstand der jeweiligen abhängigen Ansprüche.

Die Erfindung schließt den wesentlichen Gedanken des Vorsehens einer verteilten Steuerung im Mobilfunknetz ein, die einen Verbindungs-Status oder Verbindungsaufbau-Wunsch unter einem Dienst mit einem vorgegebenen Ressourcenbedarf speichern, die aktuell verfügbaren Ressourcen überwachen und mit dem Ressourcenbedarf dieses Dienstes vergleichen und im Ergebnis des Vergleiches ein die (Wieder-)Verfügbarkeit des ressourcenaufwendigen Dienstes kennzeichnendes Signal erzeugen kann. Weiter schließt die Erfindung den Gedanken ein, dieses Signal an mindestens eines der an einer Verbindung beteiligten Endgeräte zu übermitteln und dort insbesondere zur Generierung einer den Nutzer über die Verfügbarkeit des in Rede stehenden Dienstes informierenden Anzeige zu nutzen.

In einer bevorzugten Verfahrensführung ist vorgesehen, dass die den Verbindungs-Status oder Verbindungsaufbau-Wunsch repräsentierende gespeicherte Information in Reaktion auf den Ablauf einer vorbestimmten Zeitspanne nach Übermittlung des die Verfügbarkeit des ersten Dienstes kennzeichnenden Signals oder in Reaktion auf ein die Ablehnung des ersten Dienstes kennzeichnendes Signal von mindestens einem der beiden Endgeräte gelöscht wird. Die Option auf die Wiederherstellung der Verbindung nach dem höherwertigen (dem ersten) Dienst wird damit aufgegeben, und das Fortbestehen von (u.U. irretierenden) diesbezüglichen Anzeigen auf den Endgeräten der Teilnehmer wird unterbunden.

Mit dem Begriff der verteilten Steuerung ist insbesondere gemeint, dass eine den aufgegebenen Verbindungs-Status oder Verbindungsaufbau-Wunsch repräsentierende Speicher-Information lokal in einer Steuereinheit derjenigen Mobilvermittlungsstelle gespeichert wird, auf deren Seite die Realisierung des ersten Dienstes aktuell nicht möglich ist. Der Begriff schließt bevorzugt weiter ein, dass in Reaktion auf ein Vergleichsergebnis, welches die Verfügbarkeit ausreichender Ressourcen zeigt, das die Verfügbarkeit des ersten Dienstes kennzeichnende Signal von der speichernden Mobilvermittlungsstelle zunächst dem an diese angeschlossenen Endgerät und nur in Reaktion auf ein von diesem ausgegebenes Bestätigungssignal auch dem zweiten Endgerät signalisiert wird.

Schließlich sieht eine bevorzugte Ausführung der verteilten Steuerung vor, dass in Reaktion auf ein Bestätigungs-Signal vom zweiten Endgerät lokal bei der speichernden Mobilvermittlungsstelle der Träger des Funkzugangssystems für den ersten Dienst umgeschaltet wird.

Eine weitere vorteilhafte Ausprägung findet der Grundgedanke der verteilten Steuerung der Dienst-Umschaltung darin, dass in Reaktion auf ein Fehlschlagen eines Wechsels zum ersten Dienst auf Seiten der dem zweiten Endgerät zugeordneten Mobilvermittlungsstelle die den aufgegebenen Verbindungs-Status oder Verbindungsaufbau-Wunsch repräsentierende Speicher-Information in der ersten Mobilvermittlungsstelle gelöscht und stattdessen in der zweiten Mobilvermittlungsstelle gespeichert wird.

In einer weiteren, relativ selbständigen Ausprägung des Erfindungsgedankens ist vorgesehen, dass während einer bestehenden Verbindung zwischen den zwei Endgeräten unter vorbestimmten Bedingungen eine automatische Umschaltung von dem ersten Dienst mit höherem Ressourcenbedarf auf den zweiten Dienst mit niedrigerem Ressourcenbedarf stattfindet und sich die Mobilvermittlungsstelle, die das Umschalten herbeigeführt hat, anschließend automatisch so verhält, als ob der Teilnehmer, dem sie zugeordnet ist, einen Verbindungsaufbau-Wunsch für den ersten Dienst signalisiert hätte.

Vorteilhafte Ausgestaltungen des erfindungsgemäßen Mobilfunknetzes korrespondieren weitgehend zu den oben genannten Verfahrensaspekten, so dass diese hier nicht im einzelnen nochmals aufgelistet werden.

Hingewiesen wird jedoch auf das dezentrale Vorsehen von Speichermitteln für Verbindungs-Status bzw. Verbindungsaufbau-Wunsch und zugeordneten Ressourcenbedarf des entsprechenden Dienstes, Überwachungsmitteln für die aktuelle Ressourcen-Verfügbarkeit und beiden zugeordneten Vergleichermitteln bei den Mobilvermittlungsstellen MSC.

Weiterhin wird hingewiesen darauf, dass bevorzugt dedizierte Signal- bzw. Datenübertragungsmittel zwischen den Mobilvermittlungsstellen zur Übertragung der durch die dezentralen Vergleichermittel generierten Signale (betreffend die Wieder-Verfügbarkeit eines höherwertigen Dienstes) bzw. der gespeicherten Information bezüglich des aufgegebenen Verbindungs-Status oder Verbindungsaufbau-Wunsches vorgesehen sind. In Zuordnung zu diesen Datenübertragungsmitteln sind in den Mobilvermittlungsstellen Steuermittel zum Einspeichern der Speicherinformation in der jeweils empfangenden Mobilvermittlungsstelle, unter gleichzeitigem Löschen in der sendenden Mobilvermittlungsstelle, vorgesehen.

Schließlich wird darauf hingewiesen, dass zwischen den MSC und den jeweils zugeordneten Endgeräten Signalübertragungsmittel für das die Wieder-Verfügbarkeit des höherwertigen Dienstes repräsentierende Ausgangssignal der jeweiligen Vergleichereinheit (in Richtung zum Endgerät hin) und eines die Reaktion des Teilnehmers repräsentierenden Eingabe-Signals (in Richtung zur MSC) vorgesehen sind.

Die vorgeschlagene Lösung deckt nicht nur den Fall ab, dass das Netz zuvor während eines Multimedia Calls einen Dienstwechsel von Multimedia nach Sprache veranlasst hat, sondern auch die Fälle, in denen zuvor während der Lebensdauer der Verbindung nur Sprache genutzt werden konnte; entweder weil das Netz bereits beim Verbindungsaufbau zu Sprache gewechselt hat, oder weil einer der beiden Teilnehmer den Wunsch nach Multimedia erst signalisiert hat, nachdem die Sprachverbindung bereits aufgebaut war.

Die verteilte Steuerung macht Änderungen am Signalisierungsprotokoll zwischen MSC A und MSC B unnötig, und die Signalisierungslast zwischen den MSCen kann reduziert werden.

Wenn man den Teilnehmerwunsch nämlich fest auf einer Seite, z.B. in MSC A, speichern würde, müsste man zum einen die Signalisierung zwischen den MSCen so erweitern, dass MSC B ggf. der MSC A mitteilen kann, warum der Dienstwechsel abgelehnt wurde - von MSC B selbst aus netzwerk-internen Gründen oder weil Teilnehmer B abgelehnt hat. Zum anderen müsste MSC B jedes Mal MSC A verständigen, wenn sich auf ihrer Seite die Möglichkeit zu einem Wechsel nach Multimedia ergibt. Die Information, ob ein Wechsel tatsächlich gewünscht wird, wäre ja nur in MSC A abgespeichert.

Vorteile und Zweckmäßigkeiten der Erfindung ergeben sich im übrigen aus der nachfolgenden skizzenartigen Beschreibung grundsätzlicher Ausführungsbeispiele anhand der Figuren. Von diesen zeigen:
Fig. 1 eine schematische Darstellung eines erfindungsgemäßen Abschnittes eines Mobilfunknetzes und
Fig. 2 die schematische Darstellung einer entsprechenden Steuerlogik in Form eines Zustandsdiagramms.

In Fig. 1 ist schematisch dargestellt, dass sich in zwei Mobilvermittlungsstellen MSC A und MSC B eines Mobilfunknetzes jeweils eine Steuereinheit STA bzw. STB befindet, die den Teilnehmerwunsch nach einem höherwertigen Dienst speichern kann.

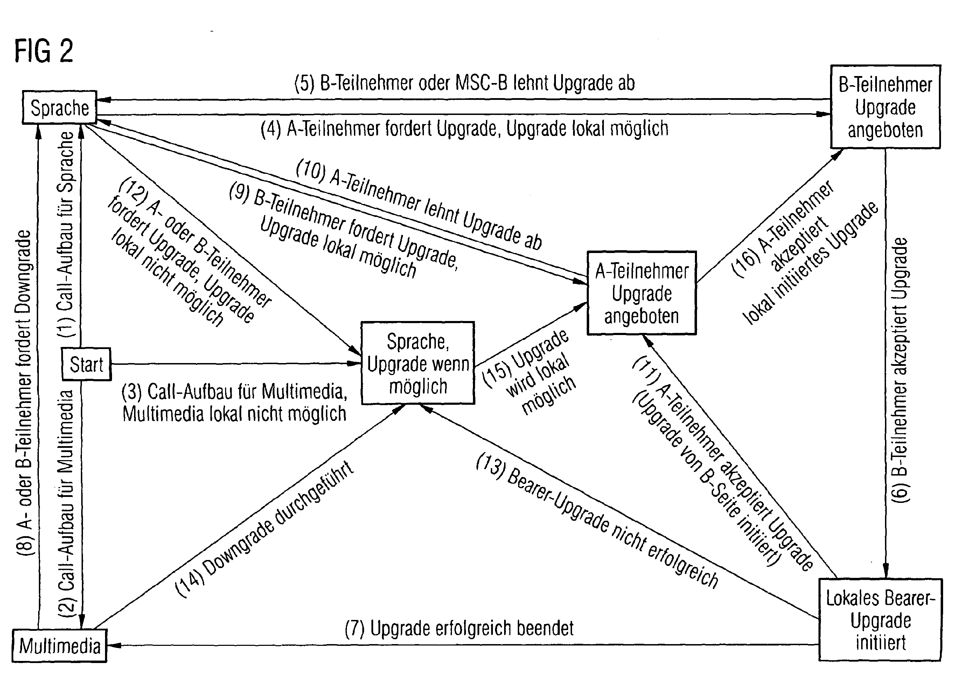

Dabei wird der Wunsch nach einem Dienstwechsel (Upgrade) immer lokal in der Steuereinheit gespeichert, die erkennt, dass auf ihrer Seite, z.B. infolge von Beschränkungen des Radio Access Netzes, der Wechsel zum höherwertigen Dienst 1 nicht möglich ist. Die Steuerlogik ist in Form eines Zustandsdiagramms in Fig. 2 am Beispiel des Dienstwechsels von "Sprache" nach "Multimedia" dargestellt.

Gemäß Stand der Technik kann ein Teilnehmer einen Sprach Call oder einen Multimedia Call aufbauen (Übergang (1) von Zustand "Start" zu "Sprache", bzw. Übergang (2) von "Start" zu "Multimedia").

Wenn ein Multimedia Call erfolgreich aufgebaut wurde und später eine der beiden MSCen gezwungen war, von Multimedia nach Sprache zu wechseln, z.B. wegen der sich verschlechternden Qualität des Funkkanals, merkt sich das die Steuereinheit lokal in dieser MSC (Übergang (14) von Zustand "Multimedia" zu "Sprache", Upgrade wenn möglich"). Erfindungsgemäß merkt sich die Steuereinheit in der MSC auch, dass ein Wechsel nach Multimedia gewünscht wird:
a) wenn beim Gesprächsaufbau ein Multimedia Call angefordert wird, die MSC in der Funkzelle, in der sich der von der MSC kontrollierte Mobilfunkteilnehmer aufhält, aber nur einen Sprach Call aufbauen kann (Übergang (3) von Zustand "Start" zu "Sprache, Upgrade wenn möglich");
b) wenn bereits eine Verbindung für Sprache aufgebaut ist und einer der beiden Teilnehmer signalisiert, dass er zu Multimedia wechseln möchte, der Wechsel aber lokal in der Funkzelle, in der sich der von der MSC kontrollierte Mobilfunkteilnehmer aufhält, nicht möglich ist (Übergang (12) von Zustand "Sprache" zu "Sprache, Upgrade wenn möglich"); und
c) wenn das lokale Radio Access Netzwerk z.B. wegen einer hohen Verkehrslast in der Zelle vorübergehend nicht in der Lage ist, den gewünschten Radio Bearer zuzuweisen (Übergang (13) von Zustand "Lokales Bearer Upgrade initiiert" zu "Sprache, Upgrade wenn möglich").

In an sich bekannter Weise wird der Dienstwechsel später, wenn im Zustand "Sprache, Upgrade wenn möglich" ein Wechsel zu Multimedia lokal möglich wird (15), z.B. nach einem Handover des Teilnehmers A von einer GSM- in eine UMTS-Zelle oder wenn das Radio Access Netz meldet, dass die Verkehrslast in der Zelle so stark abgenommen hat, dass der gewünschte Radio Bearer zugewiesen werden kann, von MSC A zunächst lokal dem Teilnehmer A angeboten.

Lehnt dieser ab, wird der Teilnehmerwunsch in der Steuereinheit gelöscht (10). Akzeptiert der Teilnehmer A (16), so wird der Wechsel zu MSC B hin signalisiert. Wenn die B-Seite den Wechsel akzeptiert (6), wird auch lokal der Radio Access Bearer umgeschaltet, so dass die Verbindung für Multimedia genutzt werden kann (7). Sollte dabei ein Fehler auftreten, z.B. weil die Verkehrslast in der Zelle zu hoch ist, wechselt das Netz erfindungsgemäß wieder auf die alte Konfiguration für Sprache zurück, und merkt sich den Teilnehmerwunsch nach Multimedia (13).

Wenn der Dienstwechsel auf die B-Seite aus irgendeinem Grund fehlschlägt (5), wird der Teilnehmerwunsch in der Steuereinheit der MSC A gelöscht. In diesem Fall weiß die Steuereinheit in MSC B, ob der Wechsel nach Multimedia durch den Teilnehmer B oder aus netzwerk-initiierten Gründen durch MSC B selbst abgelehnt wurde.

Im ersten Fall bleibt die Steuereinheit in MSC B erfindungsgemäß im Zustand "Sprache", bzw. wechselt dort hin, falls sie sich zuvor in einem anderen Zustand z.B. "Sprache, Upgrade wenn möglich" befunden hat. Im zweiten Fall, wenn der Wechsel durch MSC B abgelehnt wurde, wechselt die Steuereinheit erfindungsgemäß in den Zustand "Sprache, Upgrade wenn möglich". D.h. der Teilnehmerwunsch nach einem Dienstwechsel bleibt im Netz gespeichert. Der Ort, an dem er gespeichert ist, hat aber nun von MSC A zu MSC B gewechselt.

Die Ausführung der Erfindung ist nicht auf die in den Figuren dargestellten und oben skizzenartig erläuterten Konfigurationen bzw. Situation beschränkt, sondern ebenso in einer Vielzahl von Abwandlungen derselben möglich, die im Rahmen fachgemäßen Handelns liegen.

## Patentansprüche

1. Verfahren zum Betrieb eines Mobilfunknetzes, insbesondere nach dem GSM- oder 3GPP-Standard, mit Bereitstellung mehrerer Dienste mit unterschiedlichem Bedarf an Netzressourcen, wobei ein automatischer Aufbau einer Verbindung zwischen einem ersten und einem zweiten Endgerät (MSA, MSB), denen jeweilig eine erste oder zweite Mobilvermittlungsstelle (MSC A, MSC B) zugeordnet ist, unter einem zweiten Dienst in Reaktion auf einen an einem der Endgeräte (MSA, MSB) eingegebenen Verbindungsaufbau-Wunsch unter einem ersten Dienst unter vorbestimmten Bedingungen vorgesehen ist,
**dadurch gekennzeichnet, dass**
der Verbindungsaufbau-Wunsch unter dem ersten Dienst netzintern gespeichert, wobei die den Verbindungsaufbau-Wunsch repräsentierende Speicher-Information lokal in einer Steuereinheit (STA, STB) derjenigen Mobilvermittlungsstelle (MSC A, MSC B) gespeichert wird, auf deren Seite die Realisierung des ersten Dienstes aktuell nicht möglich ist, die Ressourcen-Verfügbarkeit während des Bestehens der Verbindung überwacht und mit dem Ressourcenbedarf des ersten Dienstes verglichen und
in Reaktion auf ein Vergleichsergebnis, welches die Verfügbarkeit ausreichender Ressourcen für den ersten Dienst zeigt, ein die Verfügbarkeit des ersten Dienstes kennzeichnendes Signal an mindestens eines der Endgeräte (MSA, MSB) übermittelt wird,
dass in Reaktion auf ein Fehlschlagen eines Wechsels zum ersten Dienst auf Seiten der dem zweiten Endgerät (MSA, MSB) zugeordneten zweiten Mobilvermittlungsstelle (MSC A, MSC B) die den Verbindungsaufbau-Wunsch repräsentierende Speicher-Information in der ersten Mobilfunkvermittlungsstelle (MSC A, MSC B) gelöscht und stattdessen in der zweiten Mobilvermittlungsstelle (MSC A, MSC B) gespeichert wird.

2. Verfahren nach Anspruch 1, **dadurch gekennzeichnet, dass** die den Verbindungsaufbau-Wunsch repräsentierende Speicher-Information in Reaktion auf den Ablauf einer vorbestimmten Zeitspanne nach Übermittlung des die Verfügbarkeit des ersten Dienstes kennzeichnenden Signals oder in Reaktion auf ein die Ablehnung des ersten Dienstes kennzeichnendes Signal von mindestens einem der beiden Endgeräte gelöscht wird.

3. Verfahren nach Anspruch 1, **dadurch gekennzeichnet, dass** in Reaktion auf ein Vergleichsergebnis, welches die Verfügbarkeit ausreichender Ressourcen zeigt, das die Verfügbarkeit des ersten Dienstes kennzeichnende Signal von der speichernden Mobilvermittlungsstelle zunächst dem an diese angeschlossenen Endgerät und nur in Reaktion auf ein von diesem ausgegebenes Bestätigungssignal auch dem zweiten Endgerät signalisiert wird.

4. Verfahren nach Anspruch 3, **dadurch gekennzeichnet, dass** in Reaktion auf ein Bestätigungs-Signal vom zweiten Endgerät lokal bei der speichernden Mobilvermittlungsstelle der Träger des Funkzugangssystems für den ersten Dienst umgeschaltet wird.

5. Verfahren nach einem der vorangehenden Ansprüche, **dadurch gekennzeichnet, dass** während einer bestehenden Verbindung zwischen den zwei Endgeräten unter vorbestimmten Bedingungen eine automatische Umschaltung von dem ersten Dienst mit höherem Ressourcenbedarf auf den zweiten Dienst mit niedrigerem Ressourcenbedarf vorgesehen ist und
die Mobilvermittlungsstelle, die das Umschalten herbeigeführt hat, einen Verbindungsaufbau-Wunsch für den ersten Dienst speichert.

6. Mobilfunknetz, insbesondere nach dem GSM- oder 3GPP-Standard, mit Mitteln zur Durchführung des Verfahrens nach einem der vorangehenden Ansprüche.

7. Mobilfunknetz nach Anspruch 6, **dadurch gekennzeichnet, dass** die Mobilvermittlungsstellen (MSC A, MSC B) verteilte Steuerungen (STA, STB) aufweisen, in denen jeweils vorgesehen sind:
Speichermittel zur Speicherung eines Verbindungsaufbau-Wunsches nach einem Dienst mit vorgegebenem Ressourcenbedarf sowie des zugehörigen Ressourcenbedarfes,
Ressourcenüberwachungsmittel zur Überwachung der aktuellen Ressourcen-Verfügbarkeit bei der Mobilvermittlungsstelle,
mit den Speichermitteln sowie den Ressourcen-Überwachungsmitteln verbundene Vergleichermittel zum Vergleich des Ressourcenbedarfs mit der Ressourcen-Verfügbarkeit und zur Ausgabe eines das Vergleichsergebnis kennzeichnenden Signals.

8. Mobilfunknetz nach Anspruch 6 oder 7, **gekennzeichnet durch** Zeitgebermittel, welche mit der Übermittlung des die Verfügbarkeit des ersten Dienstes kennzeichnenden Signals getriggert werden, und
eine mit den Zeitgebermitteln steuerungsmäßig verbundene Löscheinrichtung zur Löschung der den Verbindungsaufbau-Wunsch repräsentierenden Speicher-Information nach einer den Zeitgebermitteln zugeordneten vorbestimmten Zeitspanne.

9. Mobilfunknetz nach einem der Ansprüche 6 bis 8, **dadurch gekennzeichnet, dass** den Mobilvermittlungsstellen Signal- bzw. Datenübertragungsmittel zur Übertragung von den Verbindungsaufbau-Wunsch betreffender Speicherinformation zu jeweils einer anderen Mobilvermittlungsstelle sowie Steuermittel zum Speichern der Speicherinformation in der empfangenden Mobilvermittlungsstelle, unter gleichzeitigem Löschen in der sendenden Mobilvermittlungsstelle, zugeordnet sind.

10. Mobilfunknetz nach einem der Ansprüche 6 bis 9, **dadurch gekennzeichnet, dass** den Mobilvermittlungsstellen Signalübertragungsmittel zur Übertragung des Ausgangssignals der Vergleichermittel an ein zugeordnetes Endgerät sowie eines am Endgerät erzeugten Signals in Reaktion hierauf zugeordnet sind.

## Claims

1. Method for operating a mobile communications network, in particular in accordance with the GSM or 3GPP standard, with provisioning of a plurality of services having different network resource requirements, wherein an automatic setup of a connection between a first and a second terminal (MSA, MSB) to which a first or second mobile switching centre (MSC A, MSC B) is respectively assigned under a second service is provided subject to predetermined conditions in response to a connection setup request entered at one of the terminals (MSA, MSB) under a first service,
**characterised in that**
the connection setup request entered under the first service is stored internally in the network, with the storage information representing the connection setup request being stored locally in a control unit (STA, STB) of that mobile switching centre (MSC A, MSC B) at whose end of the connection the implementation of the first service is currently not possible, the resource availability is monitored during the lifetime of the connection and compared with the resource requirements of the first service, and
in response to a comparison result indicating the availability of sufficient resources for the first service, a signal characterising the availability of the first service is transmitted to at least one of the terminals connected thereto and signalled to at least one of the terminals (MSA, MSB),
in response to a failure of a changeover to the first service on the part of the second mobile switching centre (MSC A, MSC B) assigned to the second terminal (MSA, MSB), the storage information representing the connection setup request is deleted in the first mobile switching centre (MSC A, MSC B) and stored instead in the second mobile switching centre (MSC A, MSC B).

2. Method according to claim 1, **characterised in that** the storage information representing the connection setup request is deleted by at least one of the two terminals in response to the expiration of a predetermined time period after transmission of the signal characterising the availability of the first service or in response to a signal characterising the rejection of the first service.

3. Method according to claim 1, **characterised in that** in response to a comparison result indicating the availability of sufficient resources, the signal characterising the availability of the first service for the first service is signalled by the storing mobile switching centre initially to the terminal connected thereto and only in response to an acknowledgement signal output by the latter also to the second terminal.

4. Method according to claim 3, **characterised in that** in response to an acknowledgement signal from the second terminal, the carrier of the radio access system for the first service is switched over locally at the storing mobile switching centre.

5. Method according to one of the preceding claims, **characterised in that** during an existing connection between the two terminals, an automatic switchover from the first service having higher resource requirements to the second service having lower resource requirements is provided subject to predetermined conditions and
the mobile switching centre which initiated the switchover stores a connection setup request for the first service.

6. Mobile communications network, in particular in accordance with the GSM or 3GPP standard, having means for performing the method according to one of the preceding claims.

7. Mobile communications network according to claim 6, **characterised in that** the mobile switching centres (MSC A, MSC B) have distributed controllers (STA, STB) in each of which the following are provided:
storage means for storing a connection setup request for a service having predefined resource requirements as well as the associated resource requirements,
resource monitoring means for monitoring current resource availability at the mobile switching centre,
comparator means connected to the storage means and the resource monitoring means for comparing the resource requirements with resource availability and for outputting a signal characterising the comparison result.

8. Mobile communications network according to claim 6 or 7, **characterised by** timer means which are triggered by the transmission of the signal characterising the availability of the first service, and
a deletion device connected as part of the control functionality to the timer means for deleting the storage information representing the connection setup request after a predetermined time period assigned to the timer means.

9. Mobile communications network according to one of claims 6 to 8, **characterised in that** signal and/or data transmission means for transmitting storage information relating to the connection setup request to another mobile switching centre in each case, as well as control means for storing the storage information in the receiving mobile switching centre, while the information is simultaneously deleted in the transmitting mobile switching centre are assigned to the mobile switching centres.

10. Mobile communications network according to one of claims 6 to 9, **characterised in that** signal transmission means for transmitting the output signal of the comparator means to an assigned terminal and for transmitting a signal generated at the terminal in response thereto are assigned to the mobile switching centres.

## Revendications

1. Procédé pour exploiter un réseau radio mobile, en particulier selon la norme GSM ou 3GPP, avec mise à disposition de plusieurs services avec un besoin différent en ressources réseau, un établissement automatique d'une liaison entre un premier et un deuxième terminal (MSA, MSB), auxquels est respectivement associé un premier ou un deuxième centre de commutation mobile (MSC A, MSC B), étant prévu sous un deuxième service en réaction à une demande d'établissement de liaison, introduite au niveau de l'un des terminaux (MSA, MSB), sous un premier service dans des conditions prédéterminées, **caractérisé en ce que** :
la demande d'établissement de liaison sous le premier service est stockée en interne au réseau, l'information de mémoire représentant la demande d'établissement de liaison étant stockée localement dans une unité de commande (STA, STB) du centre de commutation mobile (MSC A, MSC B) du côté duquel la réalisation du premier service n'est actuellement pas possible,
la disponibilité des ressources est surveillée pendant l'existence de la liaison et est comparée avec le besoin en ressources du premier service ; et,
en réaction à un résultat de la comparaison qui montre la disponibilité de ressources suffisantes pour le premier service, un signal indiquant la disponibilité du premier service est transmis à au moins l'un des terminaux (MSA, MSB) ;
en réaction à un échec d'un passage au premier service du côté du deuxième centre de commutation mobile (MSC A, MSC B) associé au deuxième terminal (MSA, MSB),
l'information de mémoire représentant la demande d'établissement de liaison est effacée dans le premier centre de commutation mobile (MSC A, MSC B) et est stockée, au lieu de cela, dans le deuxième centre de commutation mobile (MSC A, MSC B).

2. Procédé selon la revendication 1, **caractérisé en ce que** l'information de mémoire représentant la demande d'établissement de liaison est effacée par au moins l'un des deux terminaux en réaction à l'expiration d'un laps de temps prédéterminé après la transmission du signal indiquant la disponibilité du premier service ou en réaction à un signal indiquant le refus du premier service.

3. Procédé selon la revendication 1, **caractérisé en ce que**, en réaction à un résultat de la comparaison qui montre la disponibilité de ressources suffisantes, le signal indiquant la disponibilité du premier service est signalé tout d'abord par le centre de commutation mobile de stockage au terminal connecté à celui-ci et, uniquement en réaction à un signal de confirmation émis par celui-ci, également au deuxième terminal.

4. Procédé selon la revendication 3, **caractérisé en ce que**, en réaction à un signal de confirmation, le support du système d'accès radio est commuté localement, au niveau du centre de commutation mobile de stockage, par le deuxième terminal pour le premier service.

5. Procédé selon l'une des revendications précédentes, **caractérisé en ce que**, pendant une liaison existant entre les deux terminaux, une commutation automatique du premier service avec un besoin en ressources supérieur sur le deuxième service avec un besoin en ressources moindre est prévue dans des conditions prédéterminées et le centre de commutation mobile qui a provoqué la commutation stocke une demande d'établissement de liaison pour le premier service.

6. Réseau radio mobile, en particulier selon la norme GSM ou 3GPP, avec des moyens permettant d'exécuter le procédé selon l'une des revendications précédentes.

7. Réseau radio mobile selon la revendication 6, **caractérisé en ce que** les centres de commutation mobile (MSC A, MSC B) comportent des commandes distribuées (STA, STB) dans chacune desquelles sont prévus :
des moyens de mémoire pour stocker une demande d'établissement de liaison après un service avec un besoin en ressources prédéterminé ainsi que le besoin en ressources associé ;
des moyens de surveillance des ressources pour surveiller la disponibilité actuelle des ressources auprès du centre de commutation mobile ;
des moyens de comparaison reliés aux moyens de mémoire ainsi qu'aux moyens de surveillance des ressources, pour comparer le besoin en ressources avec la disponibilité des ressources et pour émettre un signal indiquant le résultat de la comparaison.

8. Réseau radio mobile selon la revendication 6 ou 7, **caractérisé par** des moyens d'horloge qui sont déclenchés avec la transmission du signal indiquant la disponibilité du premier service et un dispositif d'effacement relié en commande aux moyens d'horloge pour effacer l'information de mémoire représentant la demande d'établissement de liaison au terme d'un laps de temps prédéterminé associé aux moyens d'horloge.

9. Réseau radio mobile selon l'une des revendications 6 à 8, **caractérisé en ce que** sont associés aux centres de commutation mobile, des moyens de transmission de signaux respectivement de données pour transmettre une information de mémoire concernant la demande d'établissement de liaison vers respectivement un autre centre de commutation mobile, ainsi que des moyens de commande pour stocker l'information de mémoire dans le centre de commutation mobile récepteur tout en effaçant en même temps dans le centre de commutation mobile émetteur.

10. Réseau radio mobile selon l'une des revendications 6 à 9, **caractérisé en ce que** sont associés aux centres de commutation mobile, des moyens de transmission de signaux pour transmettre le signal de sortie des moyens de comparaison à un terminal associé ainsi que, en réaction à ceci, un signal généré au niveau du terminal.
